# EUROPÄISCHE PATENTANMELDUNG

(11) **EP 3 213 906 A1**
(43) Veröffentlichungstag der Anmeldung: **06.09.2017**
(21) Anmeldenummer: 16000531.0
(22) Anmeldetag: 05.03.2016
(51) Int. Cl.: B29C 67/00, B33Y 80/00, B60R 13/00

(54) **VERFAHREN ZUR HERSTELLUNG EINES BAUELEMENTS ZUR AUSKLEIDUNG DES INNENBEREICHS EINER ROHKAROSSERIE EINES FAHRZEUGS**

(71) Anmelder: Rökona Textilwerk GmbH & Co. KG, 72072 Tübingen (DE)
(72) Erfinder: WESTERKAMP, Arved H., 72581 Dettingen an der Erms (DE)
(74) Vertreter: Wasmuth, Rolf

(57) **Zusammenfassung**

Die Erfindung betrifft ein Verfahren zur Herstellung eines Bauelements zur Auskleidung des Innenbereichs (96) einer Rohkarosserie (95) eines Fahrzeugs. Das Bauelement (1,21,41,61) weist eine der Rohkarosserie (95) abgewandte Sichtseitenschicht (5, 25, 45, 65) und eine der Rohkarosserie (95) zugewandte Montageseitenschicht (6, 26, 46, 66) auf. Die Sichtseitenschicht (5, 25, 45, 65) bildet die Auskleidung. Zwischen der Sichtseitenschicht (5, 25, 45, 65) und der Montageseitenschicht (6, 26, 46, 66) ist ein Füllelement (7, 27, 47, 67) angeordnet. Das Bauelement (1, 21, 41, 61) wird mit seiner Sichtseitenschicht (5, 25, 45, 65), seinem Füllelement (7, 27, 47, 67) und seiner Montageseitenschicht (6, 26, 46, 66) zumindest teilweise in einem direkten generativen Fertigungsverfahren additiv gefügt.

## Beschreibung

Die Erfindung betrifft ein Verfahren zur Herstellung eines Bauelements zur Auskleidung des Innenbereichs einer Rohkarosserie eines Fahrzeugs nach dem Oberbegriff des Anspruchs 1.

Derartige Bauelemente, wie beispielsweise ein Himmel, eine Säulenverkleidung, eine Hutablage oder eine Airbag-Verkleidung, werden gegenwärtig in einem langwierigen, komplizierten und teuren Prozess hergestellt. Überall muss zunächst das Rohmaterial erzeugt werden, um dann daraus Garn für die Herstellung von biegeschlaffen Textilien zu gewinnen. Anschließend werden solche Textilien dann beispielsweise mit einem Schaum oder einem Vlies zusammengefügt. Diese Kombination aus Textil und Schaum oder Vlies kann dann beispielsweise in einer Spritzform verspritzt werden, um eine Säulenverkleidung herzustellen, oder in einem Verpressungsverfahren mit einer Trägersturktur, welche aus Fasern, Klebern oder dergleichen besteht, umgeformt und verschweißt werden, um beispielsweise einen Himmel, eine Hutablage oder dergleichen herzustellen. Bei diesen Umformungsprozessen wird insbesondere das Textil gedehnt und gestaucht, wodurch eine inhomogene Optik der Oberfläche des Textils entsteht. Eine solche inhomogene Optik lässt sich nur durch aufwändige Verfahren vermeiden, bei denen beispielsweise zur Herstellung der Textilien Garn unterschiedlicher Farben verwendet wird, um so Dehnungen und Stauchungen des Textils optisch zu kaschieren. Bei Veränderungen der den verschiedenen Bauelementen zugrunde liegenden Formen ist häufig eine aufwändige Anpassung des Herstellungsverfahrens erforderlich.

Neben der großen Anzahl an benötigten Verfahrensschritten zur Herstellung eines derartigen Bauelements sind insbesondere die Kosten für die zur Herstellung der Bauelemente benötigten Werkzeuge nachteilig.

In nachgelagerten Verfahrensschritten werden derartige Bauelemente mit weiteren Funktionselementen ausgestattet. So wird beispielsweise ein Himmel noch mit Anbauteilen wie beispielsweise Leuchten oder Griffen und auch mit Kabeln zur Stromversorgung von elektrischen Bauteilen versehen. Auch derartige abschließende Fertigungsprozesse sind zeit- und kostenintensiv.

Aufgabe der Erfindung ist es, ein einfaches und schnelles Verfahren zur Herstellung eines Bauelements zur Auskleidung des Innenbereichs einer Rohkarosserie eines Fahrzeugs anzugeben.

Die Aufgabe wird durch ein Verfahren mit den Merkmalen des Anspruchs 1 gelöst.

Gemäß dem Anspruch 1 wird das Bauelement mit seiner Sichtseitenschicht, seinem Füllelement und seiner Montageseitenschicht zumindest teilweise in einem direkten generativen Fertigungsverfahren additiv gefügt. Vorteilhaft ist vorgesehen, dass das Bauelement mit seiner Sichtseitenschicht, seinem Füllelement und seiner Montageseitenschicht vollständig in einem direkten generativen Fertigungsverfahren additiv gefügt wird.

Die Fertigung erfolgt also direkt auf der Basis von rechnerinternen Datenmodellen aus formlosen oder formneutralen Materialien, wobei es sich bei diesem Verfahren um ein urformendes Verfahren handelt, bei dem keine speziellen Werkzeuge zur Fertigung eines konkreten Erzeugnisses erforderlich sind, insbesondere keine formgebenden Werkzeuge wie beispielsweise eine Gießform. Allerdings kann es vorteilhaft sein Gießformen zu verwenden. Unter "additiv" werden alle Herstellverfahren zusammengefasst, bei denen der Werkstoff zur Erzeugung eines Bauteils schichtweise hinzugefügt wird.

Das steht im Gegensatz zu den klassischen subtraktiven Fertigungsverfahren wie Fräsen, Bohren und Drehen, bei denen Material abgetragen wird, um das endgültige Bauteil zu erzeugen. Das Schichtbauprinzip ermöglicht es, geometrisch komplexe Strukturen herzustellen, die mit konventionellen Fertigungsverfahren nicht oder nur aufwändig realisiert werden können. Derartige Fertigungsverfahren werden häufig umgangssprachlich als 3D-Druck bezeichnet. Eine genaue Beschreibung der verschiedenen Prozesse und Verfahren, die unter dem Begriff "additive Fertigungsverfahren" zusammengefasst werden, findet sich in der Richtlinie VDI 3405. Der dort definierte Begriff "additive Fertigungsverfahren" ist mit dem hier verwendeten Begriff "additiv Fügen in einem direkten generativen Fertigungsverfahren" gleichzusetzen. Die hier angesprochene additive Fügung in einem direkten generativen Fertigungsverfahren kann mit Hilfe jedes in der Richtlinie VDI 3405, auf die hier ausdrücklich Bezug genommen wird, angegebenen additiven Fertigungsverfahrens erfolgen. Zu derartigen Fertigungsverfahren zählen beispielsweise Extrusionsverfahren, bei denen ein Kunststofffaden durch eine beheizte Düse aufgeschmolzen und geometrisch definiert abgelegt wird. Hierbei wächst das Bauteil zusammen, indem punktgenau einzelne Materialstränge Schicht für Schicht dort dosiert werden, wo weiteres Material für das endgültige Bauteil benötigt wird.

Andere additive Fertigungsverfahren sind beispielsweise pulverbasierte Prozesse, bei denen pulverisiertes Ausgangsmaterial in einer dünnen Schicht auf die Arbeitsfläche aufgetragen wird und anschließend punktgenau mit einem Laser aufgeschmolzen wird. Hierbei wächst das aufgeschmolzene Material beim Wiedererstarren mit den darunter liegenden Strukturen und der direkten Nachbarschaft zusammen. Wenn eine Schicht fertig ist, wird wieder eine dünne Schicht frisches Pulver aufgetragen, und der Vorgang beginnt von neuem. So wächst das Bauteil aus dem Pulver zusammen. Solche Laserverfahren funktionieren sowohl mit Kunststoffen als auch mit Metallen.

Bei einem weiteren additiven Fertigungsverfahren, das in der Fachsprache als 3D-Druck bezeichnet wird, wird wie bei den pulverbasierten Prozessen loses Partikelmaterial gleichmäßig auf die gesamte Baubreite aufgetragen. Wo das Bauteil entstehen soll, wird hier per Druckkopf Bindemittel aufgetragen, das die jeweils zuletzt aufgetragene Schicht benetzt und mit der darunter liegenden Schicht verbindet. Der Begriff 3D-Druck wird in der Fachsprache im Gegensatz zu seiner umgangssprachlichen Bedeutung nicht für alle, sondern lediglich für dieses eine, bestimmte additive Fertigungsverfahren verwendet.

Dadurch, dass das Bauelement in einem direkten generativen Fertigungsverfahren additiv gefügt wird, kann das Bauelement in einem einzigen Verfahrensschritt fertig hergestellt werden. Hierdurch ergibt sich eine große Zeitersparnis gegenüber herkömmlichen Herstellungsverfahren für Bauelemente zur Auskleidung des Innenbereichs einer Rohkarosserie eines Fahrzeugs. Gleichzeitig sind Anpassungen, zum Beispiel die Änderung der Form des Bauteils, auf einfache Weise realisierbar.

Vorteilhaft ist vorgesehen, dass die Sichtseitenschicht, das Füllelement und die Montageseitenschicht aus dem gleichen Material gefügt werden. Dadurch lässt sich das Bauelement besonders einfach und schnell herstellen. Es kann vorgesehen sein, dass die Sichtseitenschicht und/oder die Montageseitenschicht derart einteilig mit dem Füllelement ausgebildet ist, dass keine Unterscheidung zwischen Sichtseitenschicht und/oder Montageseitenschicht und dem Füllelement möglich ist.

Vorteilhaft ist vorgesehen, dass ausgehend von einem Punkt des Bauelements mindestens eine Eigenschaft des Bauelements in mindestens einer Raumrichtung variiert. Dadurch kann die variierende Eigenschaft des Bauelements an lokale Anforderungen für die Verwendung des Bauelements im Innenbereich einer Rohkarosserie eines Fahrzeugs angepasst sein.

Vorteilhaft ist vorgesehen, dass die variierende Eigenschaft des Bauelements seine Dichte ist. Durch die Variation der Dichte kann an Stellen des Bauelements, an denen keine große Festigkeit oder Belastungskapazität des Bauelements erforderlich ist, Material eingespart werden, indem das Bauelement an solchen Stellen mit geringerer Dichte hergestellt wird. Umgekehrt kann das Bauelement an Stellen, an denen eine erhöhte Festigkeit oder Belastungskapazität erforderlich ist, mit größerer Dichte ausgebildet werden und so die Festigkeit des Bauteils lokal gezielt verstärkt werden.

Vorteilhaft ist die variierende Eigenschaft des Bauelements seine Porosität. Die Porosität an der Oberfläche eines Bauelements beeinflusst die Optik und Haptik des Bauelements. Dadurch, dass die variierende Eigenschaft des Bauelements seine Porosität ist, kann die Porosität beispielsweise an der der Rohkarosserie abgewandten Seite des Bauelements zur Erreichung einer gewünschten Oberflächenoptik gewählt werden. Vorteilhaft wird das Bauelement zumindest teilweise porös gefügt.

Vorteilhaft wird das Füllelement derart gefügt, dass das Füllelement den Raum zwischen Sichtseitenschicht und Montageseitenschicht des Bauelements lediglich partiell ausfüllt, so dass zwischen Sichtseitenschicht und Montageseitenschicht ein Hohlraum gebildet wird. Auf diese Weise kann an Stellen, die keine große Festigkeit des Bauelements erfordern, Material eingespart werden. Ebenso kann dadurch gezielt die lokale Flexibilität des Bauelements beeinflusst werden. Derartige Hohlräume im Bauelement können auch vorgesehen sein, um gezielt die schallabsorbierenden Eigenschaften oder die thermische Isolation des Bauelements zu beeinflussen.

Vorteilhaft ist die variierende Eigenschaft die Dicke des Bauelements. Neben den vorstehend für die anderen Eigenschaftsvariationen genannten Vorteile kann durch eine Variation der Dicke das Bauelement ganz gezielt für die Absorption von Schall ausgelegt werden. Vorteilhaft ist die Dickenvariation des Bauelements hinsichtlich einer akustischen Dämmung durch das Bauelement ausgelegt. Hierbei kann das Bauelement beispielsweise an schallbelasteten Stellen verdickt sein. Das Bauelement kann an schallbelasteten Stellen aber auch porös gefügt sein zur Absorption oder Dämmung von Schall.

Vorteilhaft ist vorgesehen, dass das Bauelement zur Erhöhung der Stabilität des Bauelements mit mindestens einem verstärkenden Werkstoff gefügt wird, und dass die variierende Eigenschaft die Stabilität ist. Der Begriff Stabilität bezieht sich in der gesamten Beschreibung auf die Festigkeit oder Belastungskapazität des Bauelements. Mit dem verstärkenden Werkstoff kann das Bauelement an Stellen, die eine erhöhte Stabilität benötigen, gezielt verstärkt werden. Vorteilhaft werden als verstärkende Werkstoffe Fasern verwendet. Fasern lassen sich auf einfache Weise additiv fügen und sorgen gleichzeitig für eine große Stabilität. Vorteilhaft werden die Fasern in eine Polymermatrix eingebettet. Dadurch ergibt sich eine hohe spezifische Steifigkeit und Festigkeit für die Bereiche des Bauelements, in denen Fasern in eine Polymermatrix eingebettet sind.

Vorteilhaft ist vorgesehen, dass das additiv gefügte Bauelement aus verschiedenen Materialien hergestellt wird und dass die variierende Eigenschaft durch die verschiedenen Materialen gebildet ist.

Vorteilhaft wird beim Fügen des Bauelements in der Sichtseitenschicht eine Sollbruchstelle zum erleichterten Aufreißen der Sichtseitenschicht gefügt. Dadurch kann beispielsweise durch einen sich entfaltenden Airbag ein Loch in das Bauelement gerissen werden. Hierbei wird das Bauelement an der Sollbruchstelle aufgetrennt.

Vorteilhaft ist vorgesehen, dass die Sichtseitenschicht eine Sichtoberfläche besitzt und dass die Sichtoberfläche farblich gemustert ist.

Vorteilhaft wird dem Bauelement eine einteilig mit dem Bauelement ausgebildete elektrische Leiterbahn mittels additiver Fügung hinzugefügt. Dadurch kann die Herstellung und Verlegung der Leiterbahn zur Stromversorgung für elektrische Bauteile im selben Verfahrensschritt wie die Herstellung des Bauelements selbst erfolgen. Eine aufwändige anschließende Verkabelung nach Herstellung und Einbau des Bauelements kann dadurch überflüssig gemacht werden. Dies stellt im Vergleich zum Stand der Technik eine große Zeitersparnis dar. Durch einteilig mit dem Bauelement ausgebildete elektrische Leiterbahnen ist die Stromversorgung platzsparend und sicher untergebracht. Die Gefahr einer versehentlichen Verletzung oder Durchtrennung von elektrischen Leitungen während des Einbaus ist dadurch minimiert.

Vorteilhaft wird bei der Herstellung des Bauelements an der Sichtseitenschicht des Bauelements eine Fassung für eine Lichtquelle additiv gefügt.

Vorteilhaft wird bei der Herstellung des Bauelements an der Sichtseitenschicht des Bauelements ein Gehäuse für eine Lichtquelle additiv gefügt.

Vorteilhaft wird bei der Herstellung des Bauelements an der Sichtseitenschicht des Bauelements eine Lichtquelle additiv gefügt.

Vorteilhaft wird zumindest ein Teil der Sichtseitenschicht des Bauelements mit einem Material gefügt, das sich elektrisch zur Abgabe von Licht anregen lässt.

Vorteilhaft ist vorgesehen, dass das Bauelement mit einem Befestigungselement zur Befestigung des Bauelements an der Rohkarosserie additiv gefügt wird und dass das Befestigungselement an der Montageseitenschicht angeordnet ist. Dadurch ist eine schnelle und einfache Befestigung des Bauelements an der Rohkarosserie möglich.

Vorteilhaft ist vorgesehen, dass das Bauelement mit einem Griff additiv gefügt wird und dass der Griff an der Sichtseitenschicht des Bauelements angeordnet ist.

Ausführungsbeispiele der Erfindung sind nachstehend anhand der Zeichnung erläutert. Es zeigen:
- Fig. 1: eine schematische, perspektivische Darstellung einer Rohkarosserie eines Fahrzeugs,
- Fig. 2: eine schematische, perspektivische Darstellung eines als Himmel ausgebildeten Bauelements,
- Fig. 3: eine schematische Schnittdarstellung des als Himmel ausgebildeten Bauelements aus Fig. 2,
- Fig. 4: eine schematische, perspektivische Darstellung eines als Säulenverkleidung ausgebildeten Bauelements,
- Fig. 5: eine schematische, perspektivische Darstellung eines als Hutablage ausgebildeten Bauelements,
- Fig. 6: eine schematische, perspektivische Darstellung eines als Sonnenblende ausgebildeten Bauelements,
- Fig. 7: eine schematische Seitenansicht eines Fabrikators,
- Fig. 8 bis 12: Darstellungen von Schnitten entlang der Linie VIII-VIII in Fig. 2 in verschiedenen Varianten des Bauteils aus Fig. 2,
- Fig. 13: eine Darstellung eines Schnitts entlang der Linie XIII-XIII in Fig. 2,
- Fig. 14: eine Darstellung eines Schnitts entlang der Linie XIV-XIV in Fig. 2,
- Fig. 15: eine Darstellung eines Schnitts entlang der Linie XV-XV in Fig. 2,
- Fig. 16: eine Darstellung eines Schnitts entlang der Linie XVI-XVI in Fig. 2 und
- Fig. 17: eine Darstellung eines Schnitts entlang der Linie XVII-XVII in Fig. 2 an einer Variante des Bauelements aus Fig. 2.

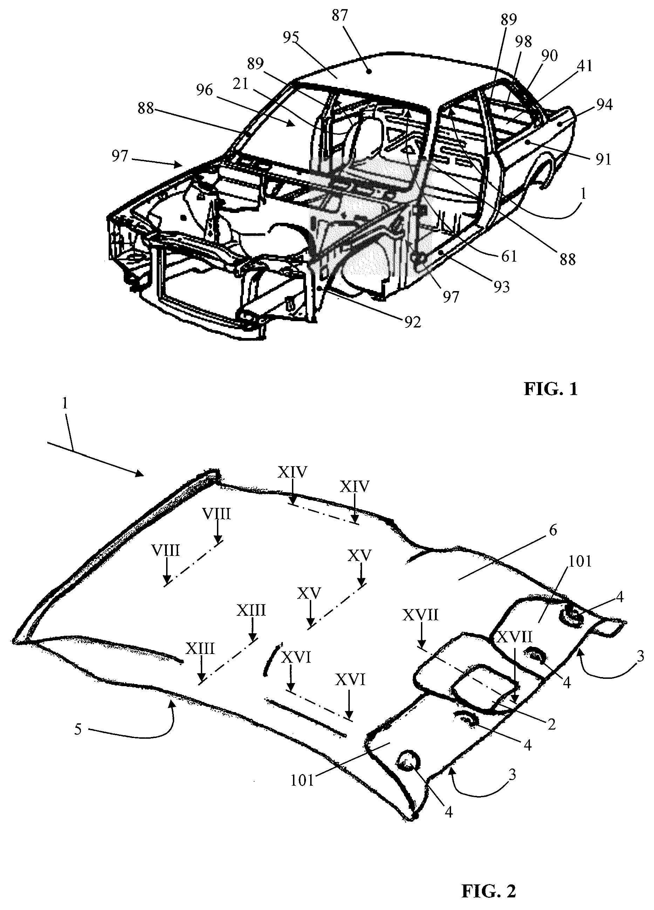

Fig. 1 zeigt eine Rohkarosserie 95 eines Fahrzeugs. Die Rohkarosserie 95 umfasst einen Karosserieunterbau 91, ein Dach 87, A-Säulen 88, B-Säulen 89 und C-Säulen 90. Der Karosserieunterbau 91 umfasst einen Frontbereich 92, einen Mittelbereich 93 und einen Heckbereich 94. Die A-Säulen 88, die B-Säulen 89 und die C-Säulen 90 verbinden das Dach 87 mit dem Mittelbereich 93 des Karosserieunterbaus 91. Die A-Säulen 88, die B-Säulen 89 und die C-Säulen 90 sind tragende Fahrzeugsäulen. Die Rohkarosserie 95 weist zwei sich gegenüberliegende Längsseiten 97 auf, die sich vom Frontbereich 92 über den Mittelbereich 93 bis zum Heckbereich 94 erstrecken. Jeder Längsseite 97 ist eine A-Säule 88, eine B-Säule 89 und eine C-Säule 90 zugeordnet. Die A-Säulen 88, die B-Säulen 89 und die C-Säulen 90 sind unabhängig von der jeweiligen Längsseite ausgehend von dem Frontbereich 92 hin zum Heckbereich 94 mit fortlaufenden Buchstaben bezeichnet. Die A-Säulen 88, die B-Säulen 89 und die C-Säulen 90 sind in Richtung vom Frontbereich 92 hin zum Heckbereich 94 mit Abstand zueinander angeordnet. Die Rohkarosserie 95 besitzt einen Innenbereich 96. Im fertig hergestellten Fahrzeug wird der Innenbereich 96 als Fahrgastraum für den Fahrer und mögliche Mitfahrer genutzt. Der Innenbereich 96 der Rohkarosserie 95 wird durch die Innenseiten des Dachs 95, der A-Säulen 88, der B-Säulen 89, der C-Säulen 90 und des Mittelbereichs 93 der Rohkarosserie 95 begrenzt. Der Innenbereich 96 der Rohkarosserie 95 des Fahrzeugs ist mit verschiedenen Bauelementen 1, 21, 41, 61 ausgekleidet.

Das Bauelement 1 ist ein Himmel und ist auf der Innenseite des Dachs 87 der Rohkarosserie 95 im Innenbereich 96 der Rohkarosserie 95 angeordnet. Das Bauelement 21 ist eine Säulenverkleidung und ist im Ausführungsbeispiel nach Fig. 1 auf der Innenseite der B-Säule 89 im Innenbereich 96 der Rohkarosserie 95 angeordnet. Derartige Säulenverkleidungen können aber auch auf den Innenseiten jeder anderen tragenden Fahrzeugsäule vorgesehen sein. Das Bauelement 41 ist eine Hutablage und ist angrenzend an den Heckbereich 94 im Mittelbereich 93 des Karosserieunterbaus 91 angeordnet. Im Heckbereich 94 des Karosserieunterbaus 91 ist ein Kofferraum 98 angeordnet. Das Bauelement 41 ist zwischen dem Kofferraum 98 und dem Innenbereich 96 der Rohkarosserie 95 angeordnet. Das Bauelement 61 ist eine Sonnenblende.

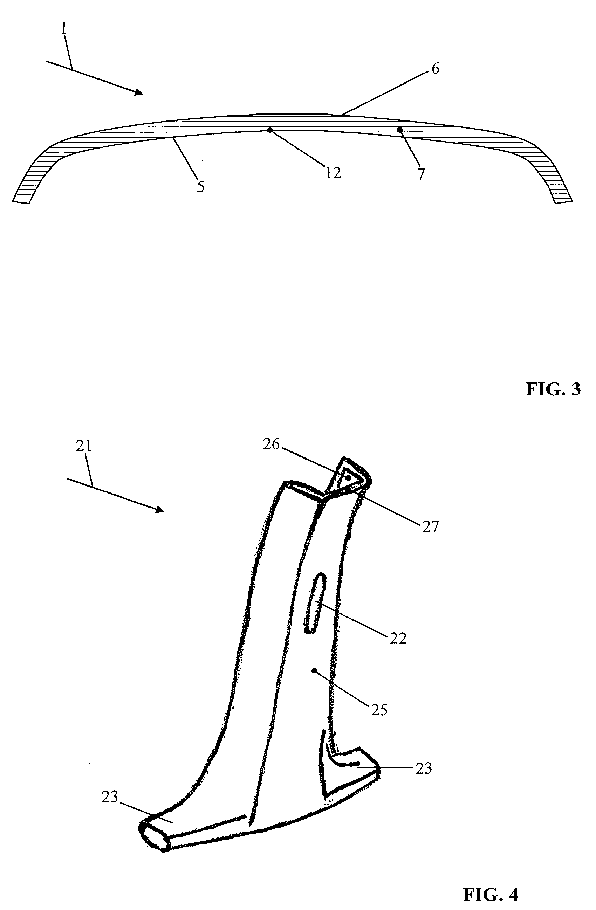

Das als Himmel ausgebildete Bauelement 1 weist eine in den Fig. 2 und 3 dargestellte Sichtseitenschicht 5 auf. Die Sichtseitenschicht 5 ist der Rohkarosserie 95 abgewandt und dem Innenbereich 96 der Rohkarosserie 95 zugewandt. Wie in Fig. 1 dargestellt, ist das als Sonnenblende ausgebildete Bauelement 61 auf der in Fig. 1 nicht dargestellten Sichtseitenschicht 5 des als Himmel ausgebildeten Bauelements 1 im Innenbereich 96 unterhalb des Dachs 87 in der Nähe der A-Säule 88 angeordnet.

Fig. 2 zeigt das als Himmel ausgebildete Bauelement 1. Das Bauelement 1 weist die Sichtseitenschicht 5 und eine Montageseitenschicht 6 auf. Die Montageseitenschicht 6 ist im eingebauten Zustand des Bauelements 1 der Rohkarosserie 95 zugewandt und dem Innenbereich 96 der Rohkarosserie 95 abgewandt. Die Form der Montageseitenschicht 6 ist im Wesentlichen an die Form der Innenseite des in Fig. 1 gezeigten Dachs 87 angepasst. Dadurch liegt die Montageseitenschicht 6 des Bauelements 1 im eingebauten Zustand mit einem großen Teil ihrer Gesamtfläche am Dach 87 der Rohkarosserie 95 an. Im Ausführungsbeispiel nach Fig. 2 weist das Bauelement 1 in dem Bereich, der im eingebauten Zustand des Bauelements 1 in Richtung des Frontbereichs 92 des Karosserieunterbaus 91 orientiert ist, eine Durchführungsöffnung 2 auf. Durch die Durchführungsöffnung 2 kann durch den Himmel beispielsweise ein Gehäuse einer Lichtquelle vom Dach 87 in den Innenbereich 96 und den Fahrgastraum ragen.

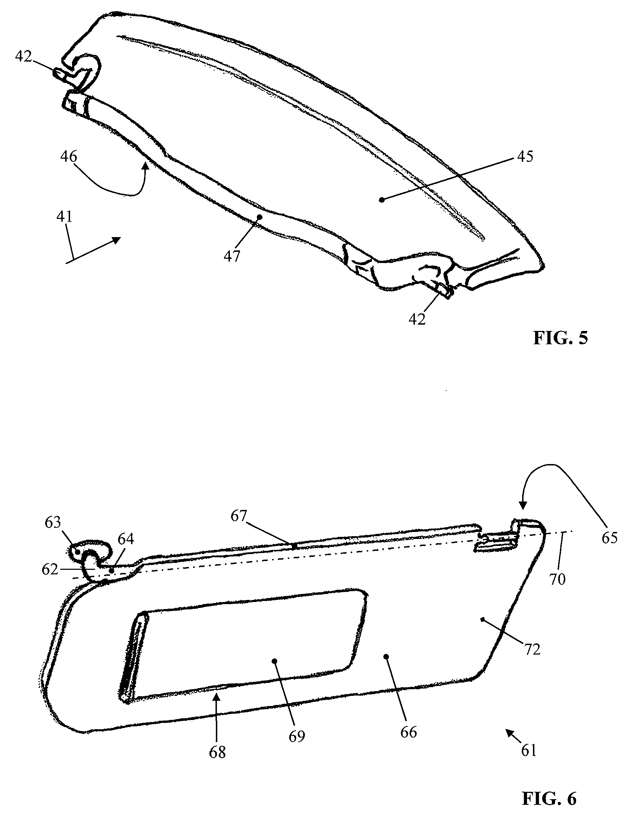

Das Bauelement 1 weist an seiner in Fig. 2 dargestellten Sichtseitenschicht 5 benachbart zur Durchführungsöffnung 2 zwei Aussparungen 3 auf. Die Aussparungen 3 dienen zur Aufnahme der in Fig. 6 näher dargestellten, als Sonnenblenden ausgebildeten Bauelemente 61. In den Bereichen der Aussparungen 3 ist das Bauelement 1 auf der Seite der Montageseitenschicht 6 durch jeweils eine Erhebung 101 verstärkt. Im eingebauten Zustand des Bauelements 1 stehen die Erhebungen 101 in Richtung der in Fig. 1 dargestellten Rohkarosserie 95 über das restliche Bauelement 1 hervor. In jeder der beiden Aussparungen 3 sind jeweils zwei Durchführungsöffnungen 4 angeordnet. Durch die Durchführungsöffnungen 4 können Befestigungselemente des Bauelements 61, wie beispielsweise das in Fig. 6 dargestellte Befestigungselement 62 des Bauelements 61, geführt werden. Dadurch ist beispielsweise eine Befestigung des Bauelements 61 am in Fig. 1 dargestellten Dach 87 der Rohkarosserie 95 möglich. Vorteilhaft wird das als Sonnenblende ausgebildete Bauelement 61 direkt mit dem als Himmel ausgebildeten Bauelement 1 einteilig gefügt, wodurch eine Befestigung des Bauelements 61 am Dach 87 überflüssig ist.

Fig. 3 zeigt einen Schnitt durch das Bauelement 1 aus Fig. 2. Im eingebauten Zustand erstreckt sich die Schnittebene senkrecht zu den beiden in Fig. 1 dargestellten Längsseiten 97 und dem Dach 87 der Rohkarosserie 95. Wie in Fig. 3 zu erkennen, ist zwischen der Sichtseitenschicht 5 und der Montageseitenschicht 6 des Bauelements 1 ein Füllelement 7 angeordnet. Das Bauelement 1 besitzt an der im eingebauten Zustand dem in Fig. 1 dargestellten Innenbereich 96 zugewandten Sichtseitenschicht 5 eine Sichtoberfläche 12. Die Sichtseitenschicht 5 bildet mit ihrer Sichtoberfläche 12 die Auskleidung des Innenbereichs 96 der Rohkarosserie 95. Das Bauelement 1 ist mit seiner Sichtseitenschicht 5, seinem Füllelement 7 und seiner Montageseitenschicht 6 in einem direkten generativen Fertigungsverfahren additiv gefügt. Im Ausführungsbeispiel nach Fig. 3 sind die Sichtseitenschicht 5, das Füllelement 7 und die Montageseitenschicht 6 aus unterschiedlichen Materialien gefügt. Die Sichtseitenschicht 5, das Füllelement 7 und die Montageseitenschicht 6 sind getrennt voneinander ausgebildete Schichten, die gemeinsam das einteilige Bauelement 1 bilden.

Es kann jedoch auch vorgesehen sein, dass die Sichtseitenschicht 5, das Füllelement 7 und die Montageseitenschicht 6 aus dem gleichen Material gefügt werden. Vorteilhaft sind sowohl die Sichtseitenschicht 5 als auch die Montageseitenschicht 6 Bestandteil des Füllelements 7. Die Sichtoberfläche 12 und die Sichtseitenschicht 5 werden direkt vom Füllelement 7 gebildet.

Fig. 4 zeigt das als Säulenverkleidung ausgebildete Bauelement 21. Das Bauelement 21 weist eine Sichtseitenschicht 25, eine Montageseitenschicht 26 und ein Füllelement 27 auf. Das Füllelement 27 ist zwischen der Sichtseitenschicht 25 und der Montageseitenschicht 26 angeordnet. Die Form der Montageseitenschicht 26 ist der Form der Innenseite der B-Säule 89 angepasst. Die Innenseite der B-Säule 89 ist dem in Fig. 1 dargestellten Innenbereich 96 der Rohkarosserie 95 zugewandt. Im eingebauten Zustand liegt die Montageseitenschicht 26 mit einem großen Teil ihrer der B-Säule 89 zugewandten Oberfläche an der B-Säule 89 an. Das Bauelement 21 weist einen Durchführungsschlitz 22 auf. Durch den Durchführungsschlitz 22 kann im eingebauten Zustand des Bauelements 21 beispielsweise ein Gurt von der B-Säule 89 durch das Bauelement 1 in den Innenbereich 96 der Rohkarosserie 95 geführt werden. Das Bauelement 21 weist an seinem dem Dach 87 abgewandten Längsende zwei sich gegenüberliegende Fortsätze 23 auf. Das Bauelement 21 ist im Wesentlichen T-förmig. Die beiden Fortsätze 23 bilden den Querbalken des Ts. Im eingebauten Zustand liegt das Bauelement 21 mit seinen Fortsätzen 23 auf dem in Fig. 1 gezeigten Mittelbereich 93 des Karosserieunterbaus 91 auf und der Querbalken des Ts verläuft parallel zur Erstreckung der in Fig. 1 dargestellten Längsseiten 97 der Rohkarosserie 95.

Fig. 5 zeigt das als Hutablage ausgebildete Bauelement 41. Das Bauelement 41 hat die Form eines im Wesentlichen rechteckigen Bretts. Das Bauelement 41 weist eine Sichtseitenschicht 45, eine Montageseitenschicht 46 und ein Füllelement 47 auf. Im eingebauten Zustand des Bauelements 41 ist die Montageseitenschicht 46 dem in Fig. 1 dargestellten Kofferraum 98 zugewandt und die Sichtseitenschicht 45 ist dem Innenbereich 96 zugewandt. Das Bauelement 41 weist an seinen Längsenden zwei sich gegenüberliegende Schwenkelemente 42 auf. Die Schwenkelemente 42 sind zapfenförmig und stehen in Richtung quer zu den in Fig. 1 dargestellten Längsseiten 97 aus dem Bauelement 41 heraus. Die Schwenkelemente 42 können in entsprechende Lager des Fahrzeugs eingehängt werden. Dadurch lässt sich das Bauelement 41 um eine Schwenkachse, die durch die beiden zapfenförmigen Schwenkelemente 42 verläuft, verschwenken. Es kann aber auch vorgesehen sein, ein als Hutablage ausgebildetes Bauelement ohne Schwenkelemente mit dem erfindungsgemäßen Verfahren herzustellen.

Fig. 6 zeigt das als Sonnenblende ausgebildete Bauelement 61. Das Bauelement 61 besitzt im Wesentlichen die Form eines rechteckigen Bretts. Das Bauelement 61 umfasst eine Sichtseitenschicht 65, eine Montageseitenschicht 66 und ein Füllelement 67. An einem Längsende des Bauelements 61 ist das im Wesentlichen L-förmige Befestigungselement 62 angeordnet. Ein dem Bauelement 61 abgewandtes Ende 63 des L-förmigen Befestigungselements 62 dient zur Befestigung des Befestigungselements 62 und des Bauelements 61 am Fahrzeug. Das L-förmige Befestigungselement 62 umfasst ein weiteres Ende 64. Das Bauelement 61 ist mit dem Ende 64 um das Ende 64 schwenkbar verbunden. Durch das Ende 64 verläuft eine Schwenkachse 70. Die Schwenkachse 70 verläuft in Längsrichtung des als Sonnenblende ausgebildeten Bauelements 61. Im eingebauten Zustand lässt sich das als Sonnenblende ausgebildete Bauelement 61 durch Schwenken um die Schwenkachse 70 gegen die in den Fig. 2 und 3 gezeigte Sichtseitenschicht 5 des als Himmel ausgebildeten Bauelements 1 klappen. Im eingeklappten Zustand des Bauelements 61 liegt die Montageseitenschicht 66 mit einem großen Teil ihrer Oberfläche an der Sichtseitenschicht 5 des Bauelements 1 an. Im eingebauten Zustand des Bauelements 61 ist das Bauelement 61 in der in Fig. 2 dargestellten Aussparung 3 aufgenommen. Im eingeklappten Zustand des Bauelements 61 ist lediglich die Oberfläche der Sichtseitenschicht 65 sichtbar. Im ausgeklappten Zustand des Bauelements 61 sind sowohl die Oberfläche der Sichtseitenschicht 65 als auch die Oberfläche der Montageseitenschicht 66 sichtbar. Das Bauelement 61 besitzt eine Sichtoberfläche 72. Die Sichtoberfläche 72 umfasst sowohl die Oberfläche der Sichtseitenschicht 65 als auch die Oberfläche der Montageseitenschicht 66. Im Ausführungsbeispiel nach Fig. 6 ist die Sichtoberfläche 72 des Bauelements 61 farblich gemustert.

Die Sichtseitenschicht 65 des Bauelements 61 besitzt eine Öffnung 68. Hinter der Öffnung 68 ist auf dem Füllelement 67 des Bauelements 61 ein Spiegel angeordnet.

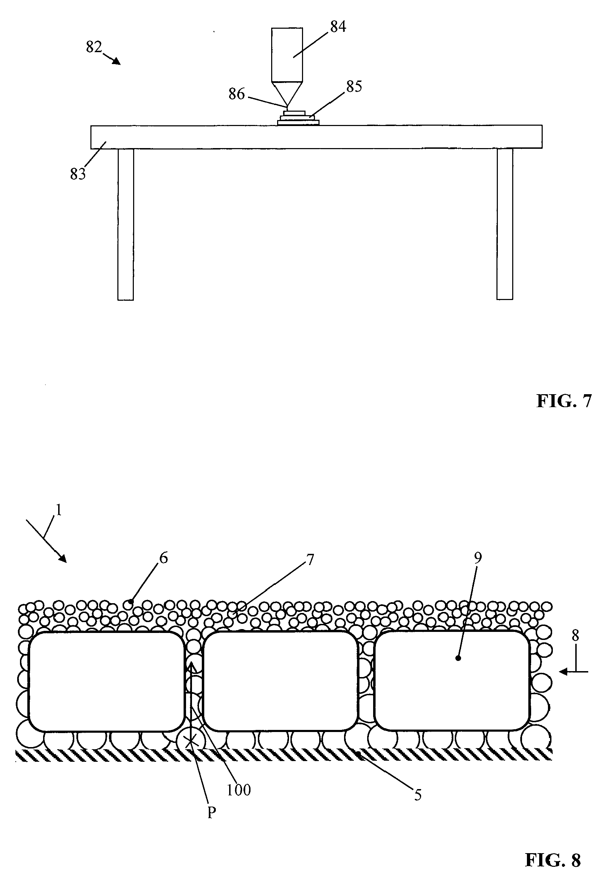

Fig. 7 zeigt in schematischer Darstellung einen Fabrikator 82. Der Fabrikator 82 wird umgangssprachlich auch als 3D-Drucker bezeichnet. Mit dem Fabrikator 82 ist das additive Fügen von Gegenständen in einem direkten generativen Fertigungsverfahren möglich. Alle vorstehend genannten Bauelemente 1, 21, 41, 61 lassen sich zumindest teilweise mit dem Fabrikator 82 herstellen. Es kann auch vorgesehen sein, dass die Bauelemente 1, 21, 41, 61 vollständig im Fabrikator 82 hergestellt werden.

Grundsätzlich kann für das erfindungsgemäße Verfahren jeder Fabrikator verwendet werden, der die zwei folgenden Herstellungsschritte durchführen kann:
1. Herstellung einer einzelnen Schicht, geformt nach der Kontur und mit der Schichtdicke entsprechend der vorgegebenen Daten für die jeweilige Schicht.
2. Verbindung jeder neuen Schicht mit der Oberfläche der zuvor hergestellten.

Diese beiden Fertigungsschritte werden beispielsweise von Fabrikatoren realisiert, die zum additiven Fügen in einem direkten generativen Fertigungsverfahren auf Basis einer der folgenden Prozesse arbeiten: Stereolithografie-Polymerisation, Lasersintern, Laserschmelzen, Layer Laminate Manufacturing, 3D-Drucken (Fachbegriff) oder Fused Layer Manufacturing.

Der Fabrikator 82 gemäß Fig. 7 arbeitet nach dem Prinzip des Fused Layer Manufacturing. Fused Layer Manufacturing wird auch als Extrusionsverfahren bezeichnet. Der Fabrikator 82 umfasst einen Drucktisch 83 und einen Druckkopf 84. In Düsen des Druckkopfs 84 wird ein vorgefertigtes thermoplastisches Druckmaterial 86 geheizt und aufgeschmolzen als Strang punktgenau aufgetragen. Dabei entsteht Schicht für Schicht ein gedruckter Gegenstand 85. Durch Aussparungen in den einzelnen Schichten ist es auch möglich, Gegenstände mit Hohlräumen auf direktem Weg herzustellen. Um eine Schicht des Gegenstands aufzubringen, wird der Druckkopf 84 über dem Drucktisch 83 bewegt. An bestimmten Stellen wird das Druckmaterial 86 in Form eines Strangs aus dem Druckkopf 84 auf den zu druckenden Gegenstand 85, auf den Drucktisch 83 gepresst. Es kann auch vorgesehen sein, dass der zu druckende Gegenstand in eine bereits vorgefertigte Druckform oder ein anderes Material gedruckt wird. Die Druckform, bzw. das Material, kann Teil des späteren Bauelements sein. Der fertig gedruckte Gegenstand 85 entspricht einem der vorstehend genannten Bauelemente 1, 21, 41, 61.

Die Fig. 8 bis 12 zeigen Schnitte durch verschiedene Varianten des als Himmel ausgebildeten Bauelements 1 aus Fig. 2 entlang der Schnittlinie VIII-VIII in Fig. 2. Die verschiedenen in den Fig. 8 bis 12 dargestellten Varianten des Bauelements 1 aus Fig. 2 unterscheiden sich lediglich in der Materialzusammensetzung. Die äußere Form des Bauelements 1 und die Position der Schnittlinie VIII-VIII ist für alle in den Fig. 8 bis 12 dargestellten Varianten des Bauelements 1 gleichbleibend. Es kann jedoch auch vorgesehen sein, die Bauelemente 21, 41, 61 derart zu gestalten, dass Schnitte durch die Bauelemente 21, 41, 61 identisch oder ähnlich den Fig. 8 bis 12 aussehen.

Fig. 8 zeigt die Darstellung eines Schnitts durch das Bauelement 1 entlang der Linie VIII-VIII in Fig. 2. Zwischen der Sichtseitenschicht 5 und der Montageseitenschicht 6 ist ein Raum 8 ausgebildet. Die Montageseitenschicht 6 wird durch das Füllelement 7 gebildet. Die Sichtseitenschicht 5 ist aus einem anderen Material als das Füllelement 7 einteilig mit dem Füllelement 7 gefügt. Das Füllelement 7 ist derart gefügt, dass das Füllelement 7 den Raum 8 zwischen Sichtseitenschicht 5 und Montageseitenschicht 6 des Bauelements 1 lediglich partiell ausfüllt, so dass zwischen Sichtseitenschicht 5 und Montageseitenschicht 6 ein Hohlraum 9 gebildet wird. Im Ausführungsbeispiel nach der Fig. 8 sind mehrere Hohlräume 9 vorgesehen. Die Hohlräume 9 werden von dem Füllelement 7 umschlossen. Das Bauelement 1 weist einen Punkt P auf. Der Punkt P ist innerhalb des Füllelements 7 in der Nähe der Sichtseitenschicht 5 angeordnet. In einer Raumrichtung 100, die sich von der Sichtseitenschicht 5 hin zu Montageseitenschicht 6 erstreckt, variiert ausgehend von dem Punkt P mindestens eine Eigenschaft des Bauelements 1. Im Ausführungsbeispiel nach Fig. 8 sind die variierenden Eigenschaften des Bauelements 1 seine Dichte und seine Porosität. Es kann aber auch vorgesehen sein, dass lediglich die Dichte in mindestens einer Raumrichtung variiert. Im Ausführungsbeispiel nach der Fig. 8 nimmt die Porosität ausgehend vom Bezugspunkt P in die Raumrichtung 100 ab. Ausgehend vom Bezugspunkt P befindet sich in Raumrichtung 100 kein Hohlraum 9. Der Weg ausgehend von dem Bezugspunkt P in Raumrichtung 100 verläuft zwischen zwei Hohlräumen 9. Das Bauelement 1 wird zumindest teilweise porös gefügt. Es kann auch vorgesehen sein, dass das Bauelement vollständig porös gefügt wird. Insbesondere kann vorgesehen sein, dass die Sichtseitenschicht porös gefügt wird. Insbesondere kann vorgesehen sein, dass die Sichtseitenschicht aus dem gleichen Material wie das Füllelement gefügt wird.

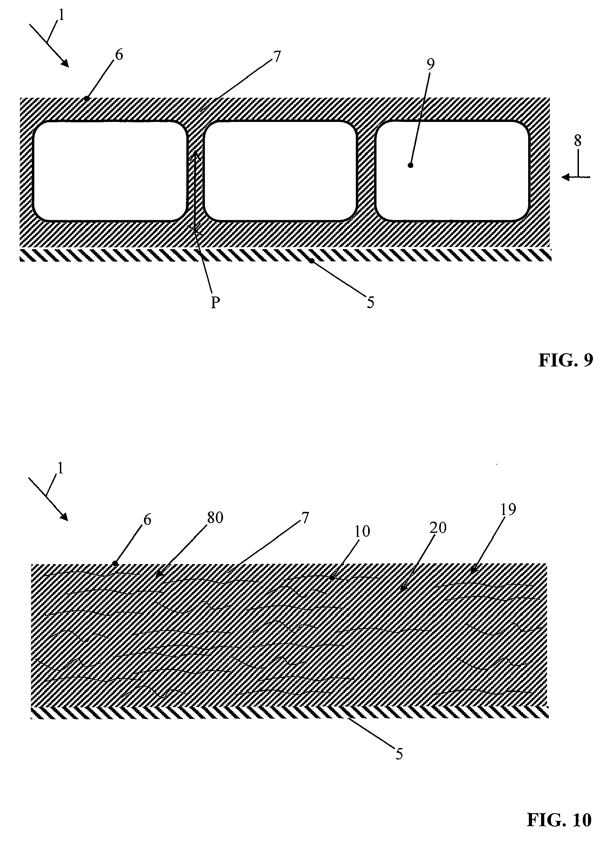

Fig. 9 zeigt die Darstellung eines Schnitts durch eine Variante des Bauelements 1 aus Fig. 2 entlang der Linie VIII-VIII in Fig. 2. Gemäß der Variante des Bauelements 1 nach der Fig. 9 wird das Füllelement 7 derart gefügt, dass es nach seiner Fertigstellung ausgehend vom Punkt P in der Raumrichtung 100 homogene Eigenschaften aufweist. Das Füllelement 7 nach der Variante des Bauelements 1 gemäß der Fig. 9 umschließt Hohlräume 9. Die Hohlräume sind zwischen der Sichtseitenschicht 5 und der Montageseitenschicht 6 im Füllelement 7 angeordnet.

Fig. 10 zeigt einen Schnitt durch eine Variante des Bauelements 1 aus Fig. 2 entlang der Linie VIII-VIII in Fig. 2. Gemäß dieser Variante des Bauelements 1 wird das Bauelement 1 zur Erhöhung der Stabilität des Bauelements 1 mit mindestens einem verstärkenden Werkstoff 10 gefügt. Als verstärkender Werkstoff 10 werden Fasern verwendet. Die Fasern werden im Ausführungsbeispiel nach Fig. 10 innerhalb des Füllelements 7 gefügt. Das Füllelement 7 umfasst eine Polymermatrix 80. Beim Fügen des Bauelements 1 werden die Fasern in die Polymermatrix 80 eingebettet. Dadurch ergibt sich eine Erhöhung der Stabilität des Füllelements 7 und des Bauelements 1. Die Fasern erstrecken sich im Wesentlichen parallel zur Sichtseitenschicht 5 und parallel zur Montageseitenschicht 6. Die Fasern verlaufen im Wesentlichen parallel zueinander. In einem weniger stabilen Bereich 20 des Bauelements 1 sind weniger Fasern pro Volumeneinheit im Füllelement 7 angeordnet als in einem stabileren Bereich 19 des Bauelements 1. Die variierende Eigenschaft des Bauelements 1 gemäß Fig. 10 ist seine Stabilität. Im stabileren Bereich 19 ist die Stabilität größer als im weniger stabilen Bereich 20. Der weniger stabile Bereich 20 erstreckt sich von der Sichtseitenschicht 5 hin zur Montageseitenschicht 6 über einen Bereich des Füllelements 7. Der weniger stabile Bereich 20 erstreckt sich im Wesentlichen quer zur Sichtseitenschicht 5 und zur Montageseitenschicht 6.

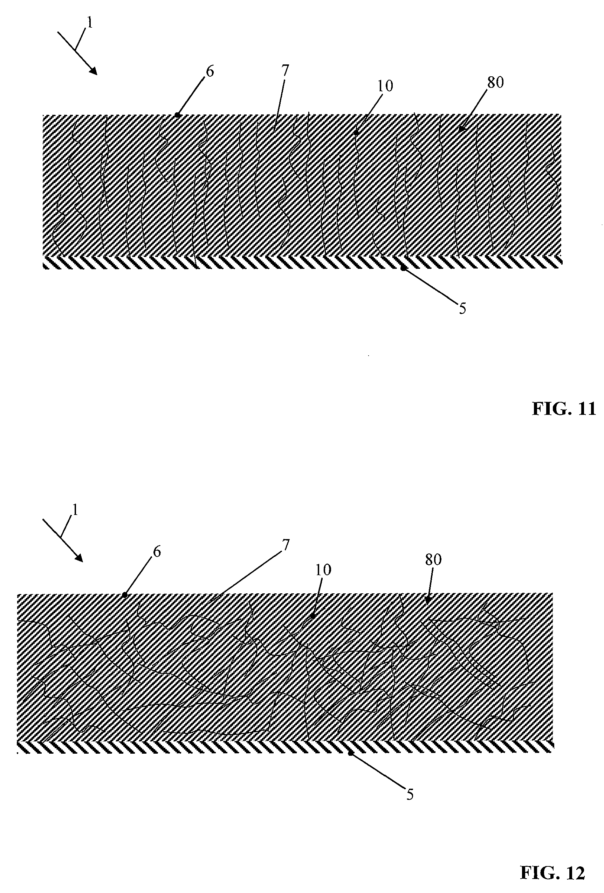

Fig. 11 zeigt einen Schnitt durch eine weitere Variante des Bauelements 1 aus Fig. 2 entlang der Linie VIII-VIII in Fig. 2. Gemäß dieser Variante des Bauelements 1 werden als verstärkender Werkstoff 10 Fasern verwendet. Die Fasern sind im Füllelement 7 gefügt, das die Polymermatrix 80 umfasst. Die Fasern sind in die Polymermatrix 80 eingebettet. Die Fasern erstrecken sich im Wesentlichen quer zur Sichtseitenschicht 5 und zur Montageseitenschicht 6. Die Fasern erstrecken sich im Wesentlichen ausgehend von der Sichtseitenschicht 5 hin zu Montageseitenschicht 6. Die Fasern verlaufen im Wesentlichen parallel zueinander. Auf diese Weise ergibt sich eine größere Biegesteifigkeit des Bauelements 1.

Fig. 12 zeigt einen Schnitt durch eine weitere Variante des Bauelements 1 aus Fig. 2 entlang der Linie VIII-VIII in Fig. 2. Zur Erhöhung der Stabilität des Bauelements 1 ist das Füllelement 7 mit Fasern als verstärkendem Werkstoff 10 gefügt. Die Fasern sind in willkürlicher Richtung orientiert. Insbesondere verlaufen sie auch schräg zur Sichtseitenschicht 5 und zur Montageseitenschicht 6. Die Fasern überkreuzen sich. Das Füllelement 7 umfasst die Polymermatrix 80. Beim Fügen des Bauelements 1 werden die Fasern in die Polymermatrix 80 eingebettet.

Insbesondere die Bauelemente nach den Fig. 10 bis 12 werden aus verschiedenen Materialien hergestellt. Die variierende Eigenschaft der Bauelemente nach den Fig. 9 bis 12 ist durch die verschiedenen Materialien gebildet. Die verschiedenen Materialien sind auf der einen Seite die Polymermatrix 80 und auf der anderen Seite die als verstärkender Werkstoff dienenden Fasern.

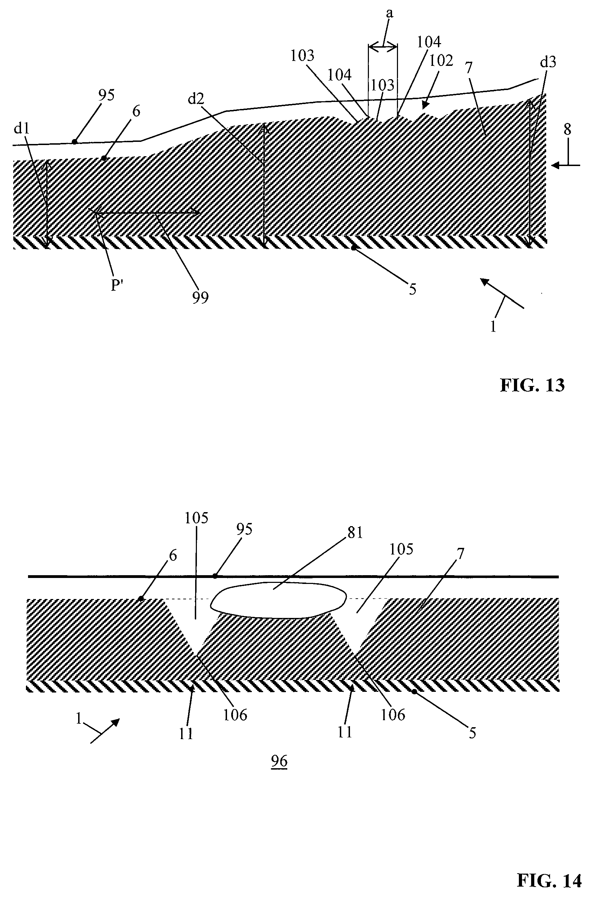

Fig. 13 zeigt einen Schnitt durch das Bauelement 1 aus Fig. 2 entlang der Linie XIII-XIII. Das Bauelement 1 weist verschiedene, senkrecht zur Sichtseitenschicht 5 gemessene Dicken d1, d2, d3 auf. Die Dicke d3 ist größer als die Dicke d2 und die Dicke d2 ist größer als die Dicke d1. Die variierende Eigenschaft des Bauelements 1 ist die Dicke. Die Dicke variiert ausgehend von einem Punkt P' des Bauelements in einer Raumrichtung 99. Die Raumrichtung 99 verläuft im Wesentlichen parallel zur Sichtseitenschicht 5. Der Verlauf der Montageseitenschicht 6 des Bauelements 1 ist im Wesentlichen dem Verlauf der Rohkarosserie 95 angepasst. Die Dickenvariation des Bauelements 1 ist hinsichtlich einer akustischen Dämmung durch das Bauelement 1 ausgelegt. Hierzu weist das Bauelement 1 insbesondere einen akustischen Dämmbereich 102 auf. Im akustischen Dämmbereich 102 ist die Montageseitenschicht 6 des Bauelements 1 kammartig ausgestaltet. Hierzu besitzt die Montageseitenschicht 6 im akustischen Dämmbereich 102 Flanken 103 und Spitzen 104. Die Spitzen 104 sind in regelmäßigen Abständen a zueinander angeordnet. Durch die kammartige Ausgestaltung des akustischen Dämmbereichs 102 wird die Oberfläche der Montageseitenschicht 6 vergrößert. Dadurch ergeben sich verbesserte Schallabsorptionseigenschaften des Bauelements 1. Zur akustischen Dämmung durch das Bauelement 1 kann auch vorgesehen sein, akustische Dämmbereiche mit Material größerer Dichte oder Porosität auszubilden.

Fig. 14 zeigt einen Schnitt durch das Bauelement 1 aus Fig. 2 entlang der Linie XIV-XIV in Fig. 2. Der Schnitt entlang der Linie XIV-XIV verläuft durch einen Airbag 81. Der Airbag 81 ist zwischen der Rohkarosserie 95 und der Montageseitenschicht 6 angeordnet. Das Bauelement 1 weist eine Sollbruchstelle 11 auf. Die Sollbruchstelle 11 verläuft in der Sichtseitenschicht 5 und begrenzt den Bereich, in dem der Airbag angeordnet ist, zumindest teilweise. Die Sollbruchstelle 11 wird beim Fügen des Bauelements in der Sichtseitenschicht 5 zum erleichterten Aufreißen der Sichtseitenschicht gefügt. Die Sollbruchstelle 11 entsteht dadurch, dass ausgehend von der Montageseitenschicht 6 keilförmige Ausnehmungen 105 im Füllelement 7 vorgesehen sind. Die keilförmigen Ausnehmungen 105 erstrecken sich ausgehend von der Montageseitenschicht 6 des Bauelements 1 in Richtung der Sichtseitenschicht 5. Die keilförmigen Ausnehmungen 105 laufen in Richtung der Sichtseitenschicht 5 spitz zu. Die keilförmige Ausnehmung 105 weist eine linienförmige Spitze 106 auf. Die Spitze 106 bildet den Boden der Ausnehmung 105. Die Sollbruchstelle 11 ist zwischen der linienförmigen Spitze 106 der Ausnehmung 105 und der gegenüberliegenden Sichtseitenschicht 5 angeordnet. Die Sollbruchstelle 11 umschließt zumindest teilweise die Fläche der Sichtseitenschicht 5, hinter der der Airbag 81 angeordnet ist. Bei einem Auslösen des Airbags 81 reißt das Bauelement 1 an der Sollbruchstelle 11 auf, so dass eine durchgängige Öffnung im Bauelement 1 entsteht und sich der Airbag 81 im Innenbereich 96 der Fahrzeugkarosserie 95 auf der Seite der Sichtseitenschicht 5 des Bauelements 1 vollständig aufblasen kann.

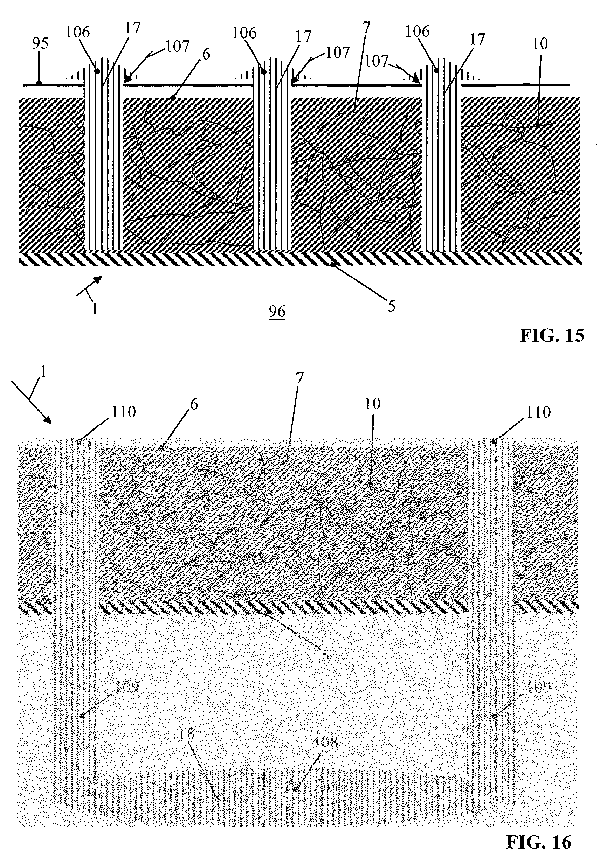

Fig. 15 zeigt einen Schnitt durch das Bauelement 1 aus Fig. 2 entlang der Linie XV-XV in Fig. 2. In der Schnittebene liegen Befestigungselemente 17. Das Befestigungselement 17 dient zur Befestigung des Bauelements 1 an der Rohkarosserie 95. Das Bauelement 1 wird additiv mit dem Befestigungselement 17 gefügt. Das Befestigungselement 17 ist an der Montageseitenschicht 6 angeordnet. Im Ausführungsbeispiel nach der Fig. 15 ragt das Befestigungselement 17 aus der Montageseitenschicht 6 heraus. An seinem der Montageseitenschicht 6 abgewandten Ende weist das Befestigungselement 17 einen pilzförmigen Fortsatz 106 auf. Der pilzförmige Fortsatz 106 ist durch eine Öffnung 107 der Rohkarosserie 95 gesteckt. Der pilzförmige Fortsatz 106 ist auf der dem Innenbereich 96 abgewandten Seite der Öffnung 107 angeordnet. Das Befestigungselement 17 ist aus einem flexiblen Material. Der pilzförmige Fortsatz 106 des Befestigungselements 17 ist nach dem Prinzip eines Widerhakens in der Öffnung 107 der Rohkarosserie 95 befestigt. Das Befestigungselement 17 ist fest mit der Montageseitenschicht 6 und dem Füllelement 7 verbunden. Mit Hilfe des Befestigungselements 17 ist das Bauelement 1 an der Rohkarosserie 95 befestigt.

Fig. 16 zeigt einen Schnitt durch das Bauelement 1 aus Fig. 2 entlang der Linie XVI-XVI in Fig. 2. Die Schnittebene enthält einen Griff 18. Das Bauelement 1 wird additiv mit dem Griff gefügt. Der Griff 18 ist an der Sichtseitenschicht 5 des Bauelements 1 angeordnet. Der Griff 18 umfasst einen Quersteg 108. Der Quersteg 108 verläuft im Wesentlichen parallel zur Sichtseitenschicht 5. An jedes Ende des Querstegs 108 schließt sich je ein Halteelement 109 des Griffs 18 an. Das Halteelement 109 durchdringt das Bauelement 1 von der Sichtseitenschicht 5 des Bauelements 1 zu seiner Montageseitenschicht 6 hin vollständig. An seinem der Montageseitenschicht 6 zugeordneten Ende weist das Halteelement 109 einen pilzförmigen Fortsatz 110 auf. Der pilzförmige Fortsatz 110 des Halteelements 109 stützt sich an der Montageseitenschicht 6 des Bauelements 1 ab. Das Halteelement 109 ist fest mit dem Bauelement 1 verbunden. Der pilzförmige Fortsatz 110 des Halteelements 109 gibt der Verbindung zwischen dem Griff 18 und den übrigen Teilen des Bauelements 1 zusätzliche Stabilität. Bei einer Krafteinwirkung auf den Griff 18 in Richtung weg von der Sichtseitenschicht 5 wirkt der pilzkopfförmige Fortsatz 110 nach dem Prinzip eines Widerhakens mit der Montageseitenschicht 6 zusammen. Der Griff 18 wird additiv gemeinsam mit der Sichtseitenschicht 5, dem Füllelement 7 und der Montageseitenschicht 6 gefügt. Der Griff 18, insbesondere der pilzförmige Fortsatz 110 können aus einem härteren und/oder stabileren Material als die Sichtseitenschicht 5, das Füllelement 7 und die Montageseitenschicht 6 gefügt werden. Der pilzförmige Fortsatz 110 muss insbesondere nicht flexibel gestaltet sein, da er nicht zur Verbindung mit dem Bauelement durch eine Öffnung des Bauelemente gesteckt werden muss, die einen kleineren Durchmesser als der pilzförmige Fortsatz 110 besitzt. Der fertig hergestellte Griff 109 ist bereits durch das Bauelement 1 gesteckt. Dies ist durch das additive Fügen des gesamten Bauelements 1 inklusive des Griffs 109 möglich.

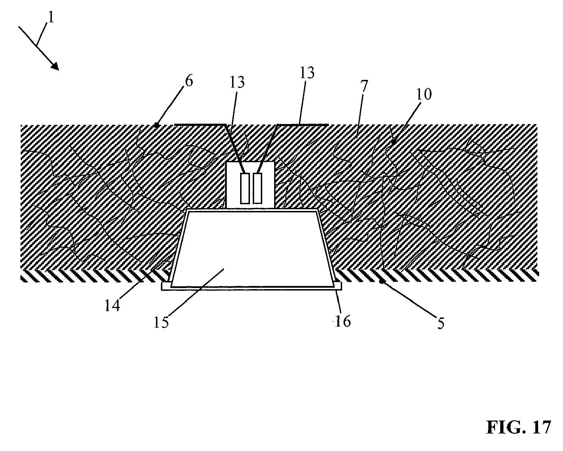

Fig. 17 zeigt einen Schnitt durch das Bauelement 1 aus Fig. 2 entlang der Linie XVII-XVII in Fig. 2. In der Schnittebene liegt eine Lichtquelle 15. Die Lichtquelle 15 wird bei der Herstellung des Bauelements 1 an der Sichtseitenschicht 5 des Bauelements 1 additiv gefügt. Zumindest ein Teil der Sichtseitenschicht 5 des Bauelements 1 wird mit einem Material gefügt, das sich elektrisch zur Abgabe von Licht anregen lässt. Die Lichtquelle 15 sitzt in einer Fassung 14. Die Fassung 14 für die Lichtquelle 15 wird bei der Herstellung des Bauelements 1 an der Sichtseitenschicht 5 des Bauelements 1 additiv gefügt. Die Lichtquelle 15 ist in einem Gehäuse 16 angeordnet. Das Gehäuse 16 wird bei der Herstellung des Bauelements 1 an der Sichtseitenschicht 5 des Bauelements 1 additiv gefügt. Sowohl die Fassung 14 als auch die Lichtquelle 15 sind zumindest teilweise innerhalb des Füllelements 7 angeordnet. Zur Stromversorgung ist die Lichtquelle 15 mit einer elektrischen Leiterbahn 13 verbunden. Die elektrische Leiterbahn 13 wird dem Bauelement 1 mittels additiver Fügung hinzugefügt. Die elektrische Leiterbahn 13 ist einteilig mit dem Bauelement 1 ausgebildet. Die elektrische Leiterbahn 13 verläuft zumindest teilweise an der Montageseitenschicht 6 des Bauelements 1.

## Patentansprüche

1. Verfahren zur Herstellung eines Bauelements zur Auskleidung des Innenbereichs (96) einer Rohkarosserie (95) eines Fahrzeugs, wobei das Bauelement (1, 21, 41, 61) eine der Rohkarosserie (95) abgewandte Sichtseitenschicht (5, 25, 45, 65) und eine der Rohkarosserie (95) zugewandte Montageseitenschicht (6, 26, 46, 66) aufweist, wobei die Sichtseitenschicht (5, 25, 45, 65) die Auskleidung bildet, und wobei zwischen der Sichtseitenschicht (5, 25, 45, 65) und der Montageseitenschicht (6, 26, 46, 66) ein Füllelement (7, 27, 47, 67) angeordnet ist,
**dadurch gekennzeichnet, dass** das Bauelement (1, 21, 41, 61) mit seiner Sichtseitenschicht (5, 25, 45, 65), seinem Füllelement (7, 27, 47, 67) und seiner Montageseitenschicht (6, 26, 46, 66) zumindest teilweise in einem direkten generativen Fertigungsverfahren additiv gefügt wird.

2. Verfahren nach Anspruch 1,
**dadurch gekennzeichnet, dass** die Sichtseitenschicht (5, 25, 45, 65), das Füllelement (7, 27, 47, 67) und die Montageseitenschicht (6, 26, 46, 66) aus dem gleichen Material gefügt werden.

3. Verfahren nach Anspruch 1 oder 2,
**dadurch gekennzeichnet, dass** ausgehend von einem Punkt (P, P') des Bauelements (1, 21, 41, 61) mindestens eine Eigenschaft des Bauelements (1, 21, 31, 41) in mindestens einer Raumrichtung (100, 99) variiert.

4. Verfahren nach Anspruch 3,
**dadurch gekennzeichnet, dass** die variierende Eigenschaft des Bauelements (1, 21, 41, 61) seine Dichte ist.

5. Verfahren nach Anspruch 3 oder 4,
**dadurch gekennzeichnet, dass** die variierende Eigenschaft des Bauelements (1,21,41,61) seine Porosität ist.

6. Verfahren nach einem der Ansprüche 1 bis 5,
**dadurch gekennzeichnet, dass** das Bauelement (1, 21, 41, 61) zumindest teilweise porös gefügt wird.

7. Verfahren nach einem der Ansprüche 1 bis 6,
**dadurch gekennzeichnet, dass** das Füllelement (7, 27, 47, 67) derart gefügt wird, dass das Füllelement (7, 27, 47, 67) den Raum (8) zwischen Sichtseitenschicht (5, 25, 45, 65) und Montageseitenschicht (6) des Bauelements (1, 21, 41, 61) lediglich partiell ausfüllt, so dass zwischen Sichtseitenschicht (5, 25, 45, 65) und Montageseitenschicht (6, 26, 46, 66) ein Hohlraum (9) gebildet wird.

8. Verfahren nach einem der Ansprüche 3 bis 7,
**dadurch gekennzeichnet, dass** die variierende Eigenschaft die Dicke (d1, d2, d3) des Bauelements (1, 21, 41, 61) ist.

9. Verfahren nach Anspruch 8,
**dadurch gekennzeichnet, dass** die Dickenvariation des Bauelements (1, 21, 41, 61) hinsichtlich einer akustischen Dämmung durch das Bauelement (1, 21, 41, 61) ausgelegt ist.

10. Verfahren nach einem der Ansprüche 3 bis 9,
**dadurch gekennzeichnet, dass** das Bauelement (1, 21, 41, 61) zur Erhöhung der Stabilität des Bauelements (1, 21, 41, 61) mit mindestens einem verstärkenden Werkstoff (10) gefügt wird, und dass die variierende Eigenschaft die Stabilität ist.

11. Verfahren nach Anspruch 10,
**dadurch gekennzeichnet, dass** als verstärkender Werkstoff (10) Fasern verwendet werden.

12. Verfahren nach Anspruch 11,
**dadurch gekennzeichnet, dass** die Fasern in eine Polymer-Matrix (80) eingebettet werden.

13. Verfahren nach einem der Ansprüche 3 bis 12,
**dadurch gekennzeichnet, dass** das additiv gefügte Bauelement (1, 21, 41, 61) aus verschiedenen Materialien hergestellt wird, und dass die variierende Eigenschaft durch die verschiedenen Materialien gebildet ist.

14. Verfahren nach einem der Ansprüche 3 bis 13,
**dadurch gekennzeichnet, dass** beim Fügen des Bauelements (1, 21, 41, 61) in der Sichtseitenschicht (5, 25, 45, 65) eine Sollbruchstelle (11) zum erleichterten Aufreißen der Sichtseitenschicht (5, 25, 45, 65) gefügt wird.

15. Verfahren nach einem der Ansprüche 1 bis 14,
**dadurch gekennzeichnet, dass** die Sichtseitenschicht (5, 25, 45, 65) eine Sichtoberfläche (12) besitzt, und dass die Sichtoberfläche (12, 72) farblich gemustert ist.
